# EUROPÄISCHE PATENTANMELDUNG

(11) **EP 1 394 965 A1**
(43) Veröffentlichungstag der Anmeldung: **03.03.2004**
(21) Anmeldenummer: 02019095.5
(22) Anmeldetag: 28.08.2002
(51) Int. Cl.: H04B 7/08

(54) **Diversity-Anlage zum Empfang digitaler Satelliten-Rundfunksignale**

(71) Anmelder: FUBA Automotive GmbH & Co. KG, 31162 Bad Salzdetfurth (DE)
(72) Erfinder: Lindenmeier, Heinz, 82152 Planegg (DE)

(57) **Zusammenfassung**

Diversity - Empfangsanlage für digitale Satellitenrundfunksignale nach dem SDARS - oder einem ähnlichen Standard für den zur Verbesserung der Übertragungssicherheit gleichzeitigen und koordinierten Empfang von digital modulierten Satellitenrundfunksignalen (5a) eines ersten Satelliten nach dem M-PSK-Verfahren und von digital modulierten Satellitenrundfunksignalen (5a') eines zweiten Satelliten nach dem M-PSK-Verfahren sowie von digital modulierten nach dem COFDM-Verfahren von terrestrischen Funkstellen ausgestrahlten Empfangssignale (5b) in benachbarten Hochfrequenzbändern der gleichen HF-Kanalbandbreite B, wobei jeweils derselbe, aber durch Laufzeiten versetzte Signalinhalt über eine Antennenanordnung (20) zu einem Empfänger (3) gelangt, der jeweils getrennte Empfangszweige (3a,a',b) für jeden der drei Funkkanäle besitzt und nach dem Überlagerungsprinzip gestaltet ist, für jeden Empfangszweig (3a,a',b) ist eine Empfangspegel-Prüfeinrichtung (25a, 25a', 25b), vorhanden, welcher jeweils der Symboltakt (18a, 18a',18b) des zugehörigen Funkdienstes zugeführt ist, in der Empfangsanlage sind für alle drei Frequenzbereiche eine steuerbare logische Schalteinrichtung (2a, 2a', 2b) vorhanden und im Empfänger (3) sind aus der Datenübertragung über den terrestrischen Empfangszweig (3b) und aus der Datenübertragung über die beiden Satelliten- Empfangszweig (3a,a') alle Datenmengen zu einer Nachricht zusammengefaßt, wobei die Empfangspegel-Prüfeinrichtungen (25a, 25a', 25b) und die steuerbaren logischen Schalteinrichtungen (2a, 2a', 2b) durch Auswahl unterschiedlicher Empfangssignale aus der Antennenanlage (20) derart gestaltet sind, daß die Empfangspegel aller Empfangssignale (5a,a',b) durch schnelle sequentielle Weiterschaltung der steuerbaren logischen Schalteinrichtungen (2a, 2a', 2b) während der Fahrt schnell vergleichend erfaßt sind und diejenige Schaltstellung (S1,S2...) der logischen Schalteinrichtungen (2a, 2a', 2b) über ein an der Fahrgeschwindigkeit und der Wellenlänge λ ausgerichtetes Zeitintervall festgehalten ist, in der die Summe der mit einem für die sichere Detektion der digitalen Information notwendigen Mindestpegel empfangenen Empfangssignale (5a,a',b) möglichst groß ist, und die Antennen-Diversityfunktion durch Einsatz von nur wenig modifizierten, serienmäßig verfügbaren Komponenten aus üblichen Empfangsanlagen ohne Diversityfunktion, realisiert ist.

## Beschreibung

Moderne Satelliten-Rundfunksysteme, wie sie zum Beispiel unter dem Namen "SDARS" in Anwendung sind, reduzieren die durch Mehrwegeausbreitung, Abschattung und sich ändernde Empfangsbedingungen aufgrund der Satellitenbewegung bedingten hohen Bitfehlerraten durch zeitverschobene Mehrfachaussendung desselben Signalinhalts. Hierbei werden von zwei Satelliten zeitversetzt QPSK-modulierte Signale ausgesendet, denen insbesondere in urbanen Gebieten zur Unterstützung ein terrestrisches COFDM-moduliertes Signal mit ebenso zeitversetzt gesendetem Informationsgehalt hinzugefügt wird. Im Empfänger werden die bei Trägerfrequenzen von etwa f = 2,33GHz auf unterschiedlichen, jedoch dicht benachbarten Frequenzbändern, im Frequenzabstand von jeweils ca. 4MHz ausgestrahlten Signale mit jeweils einem gesonderten HF-ZF-Teil 42 empfangen und die Digitalinformation unter Ausgleich der unterschiedlichen Zeitverschiebungen zwischen den Kanälen summarisch ausgewertet. Das System arbeitet somit nach dem Prinzip des Frequenzdiversity, wobei die Übertragungswege aufgrund ihrer Verschiedenheit den dekorrelierten Empfang der verschiedenen Signale ermöglichen. Dennoch ist es insbesondere in urbanen, hügeligen und in durch Bäume abgeschatteten Gebieten notwendig, das System durch eine weitere Diversityfunktion zu unterstützen.

Dies geschieht gemäß der Erfindung mit Hilfe von Antennen-Diversity. Unter den beschriebenen Empfangsbedingungen treffen auch die von den Satelliten ausgesendeten Signale nicht auf direktem Übertragungsweg am Empfangsort ein, sondern unterliegen, wie die terrestrisch ausgestrahlten Signale, der statistischen Überlagerung mehrfach reflektierter Wellen, die zu den bekannten Mehrwege-Fadings führen mit einer Wahrscheinlichkeitsdichteverteilung nach Rayleigh bzw. nach Rice.

Aus verschiedenen Anwendungen von Antennendiversitytechniken auf dem Gebiet des terrestrischen analogen FM- bzw. TV-Rundfunks ist die mit Diversity-Anordnungen erreichbare Verbesserung des Empfangs bekannt. Bezüglich der Anwendung solcher Techniken sind häufig die damit verbundenen Zusatzaufwendungen ausschlaggebend. Ebenso ist ein digitales Satellitenrundfunksystem auf der Empfängerseite auf eine wirtschaftliche und effektive technische Lösungen angewiesen. Empfängerseitige Diversity-Anlagen sind für diese Anwendung deshalb insbesondere vor dem Hintergrund des zu erwartenden technischen Aufwands und der Leistungsfähigkeit, welche sich durch die Diversityeffizienz ausdrückt, zu betrachten.

Der Erfindung liegt deshalb die Aufgabe zugrunde eine Diversity- Empfangsanlage für den Empfang von mehreren digital modulierten Satellitensignalen und einem digital modulierten terrestrischen Signal nach dem SDARS - oder einem ähnlichen Standard zu schaffen mit dem Ziel, eine Lehre anzugeben auf welche Weise besonders wirtschaftliche Lösungen realisiert werden können und deren Leistungsfähigkeit anhand der Diversityeffizienz darzustellen.

Diese Aufgabe wird bei einer Diversity-Empfangsanlage nach dem Anspruchs 1 und nach den in den folgenden Ansprüchen angegebenen Merkmalen gelöst.

Für die Wahrscheinlichkeit für die Unterschreitung des notwendigen Mindestempfangspegels im Diversity-Betrieb eines der drei Empfangskanäle gilt p_{d} = pₛⁿ, wobei pₛ die Wahrscheinlichkeit für die Unterschreitung des notwendigen Mindestempfangspegels eines Satelliten- bzw. terrestrischen Empfangssignals mit einer Einzelantenne im jeweiligen Empfangskanal bedeutet und n die Diversityeffizienz bezüglich der Signale in einem der Kanäle darstellt. Für die Diversityeffizienz der Gesamtanlage in Bezug auf die im Digitalteil des Empfängers gegebene insgesamt wirksame Diversityeffizienz n_{ges} unter Berücksichtigung der n_{SDARS} = 3 Übertragungswege, ergibt sich für den angenommenen Fall gleicher Unterschreitungswahrscheinlichkeiten pₛ für alle drei Signale die resultierende Fehlerwahrscheinlichkeit zu p_{dges} = pₛ^{nges} mit n_{ges} = nₜ + nₛ₁ + nₛ₂. Hierin sind nₜ, n_{s1,} nₛ₂ die entsprechenden Diversityeffizienzen des terrestrischen bzw. des ersten und des zweiten Satellitenkanals. Die gesamte Diversityeffizienz der Anlage besitzt somit den Wert n_{ges}. Der Zuwachs an Diversityeffizienz der Gesamtanordnung aufgrund der Diversityeffizienz der Antennenanlage allein beträgt somit in diesem Fall Δn_{ges} = n_{ges} - n_{SDARS}. Dieser Bezugswert dient im folgenden zur Beschreibung der Leistungsfähigkeit der Diversity-Antennenanlage.

Aufgrund der besonderen Struktur und der Unterschiedlichkeit der Hochfrequenzkanäle, in denen jeweils dieselbe Information jedoch zeitversetzt übertragen wird, ergeben sich von den bisher bekannten Antennendiversity-Anlagen unterschiedliche Bewertungskriterien der Diversityeffizienz. Ein wesentlicher Punkt bei den im folgenden betrachteten erfindungsgemäßen Anordnungen ist somit sowohl die Aufwandsbetrachtung vor dem Hintergrund der in vorhandenen serienmäßigen Antennen und Empfängern zusätzlich erforderlichen Maßnahmen zur Ausgestaltung der verschiedenen Antennendiversitysysteme nach der vorliegenden Erfindung als auch die damit erzielbare Diversityeffizienz.

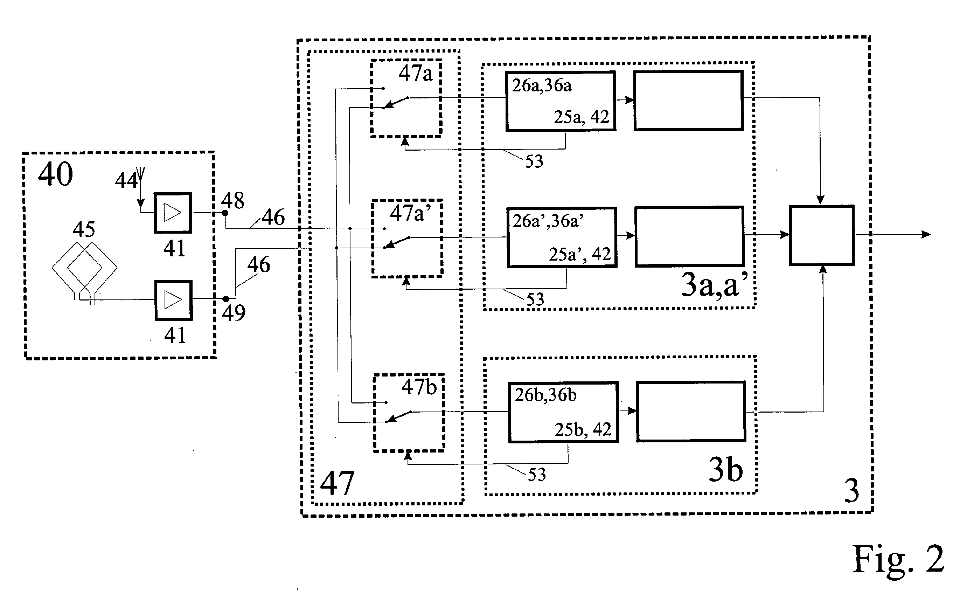

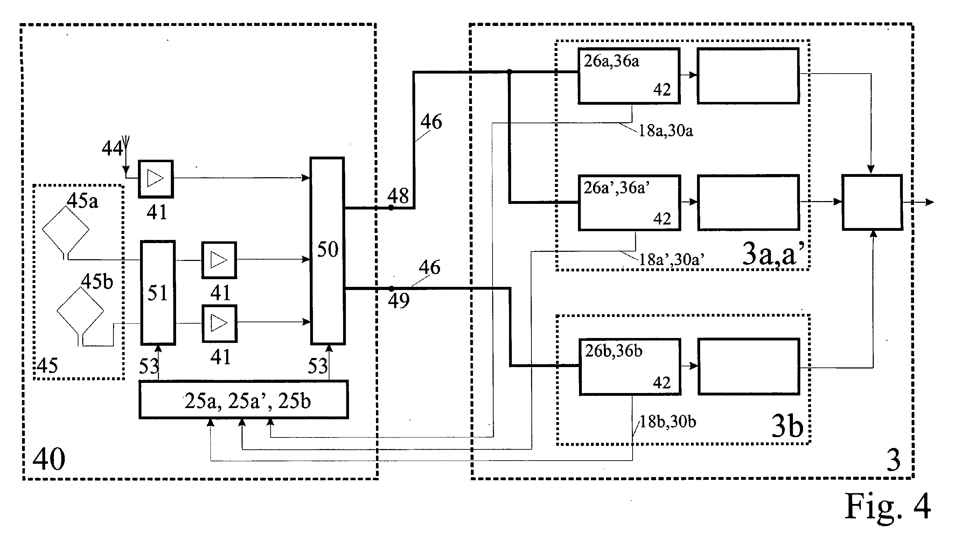

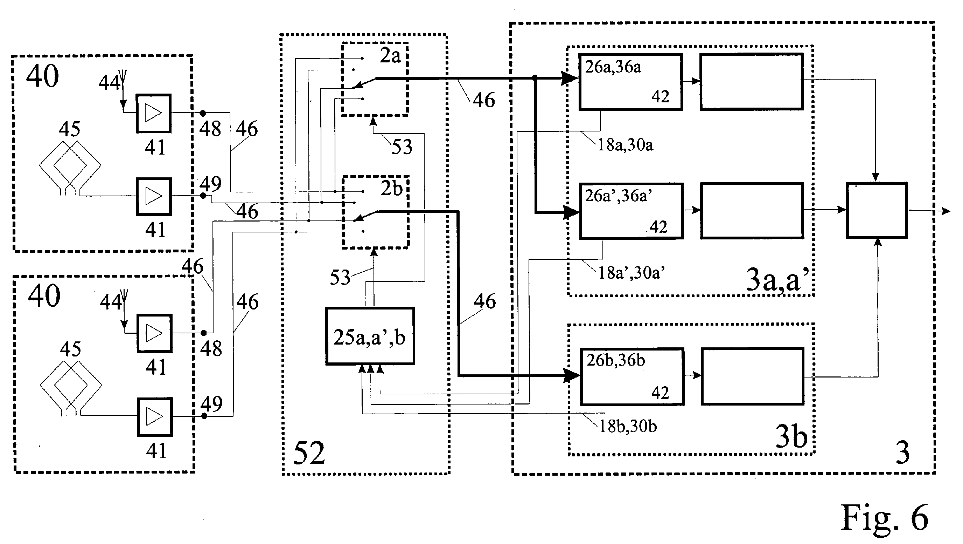

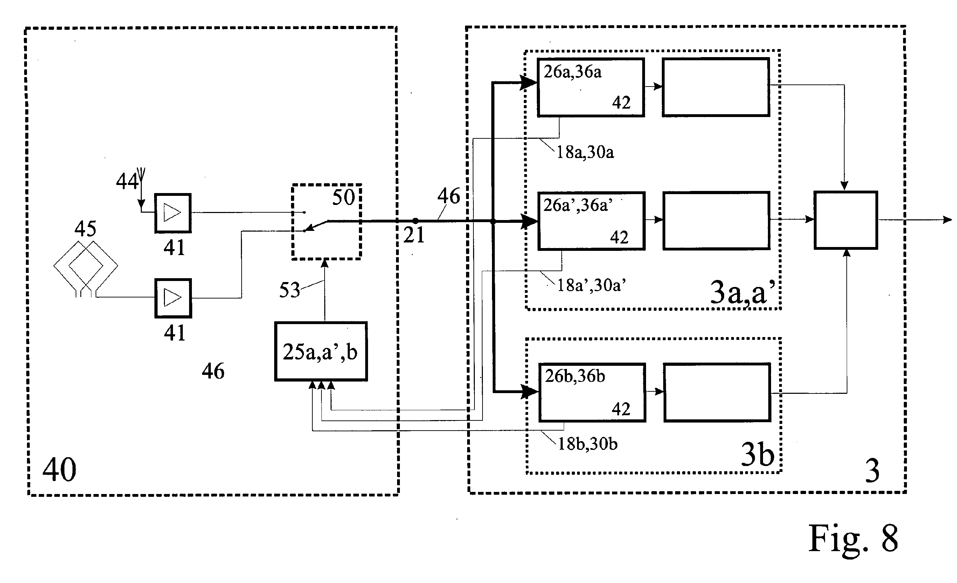

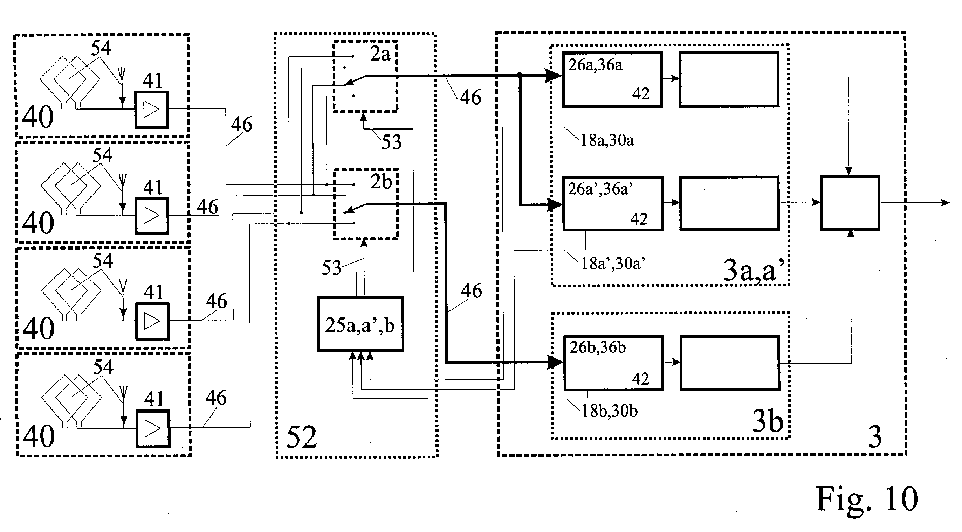

Derartige vorteilhafte Anordnungen von erfindungsgemäßen Antennendiversitysystemen nach der vorliegenden Zusatzanmeldung zeigen die folgenden Figuren:
Fig. 1:
   Grundsätzliche Anordnung zur Erläuterung der Wirkungsweise einer gemäß der Erfindung in Bezug auf die Leistungsfähigkeit/technischen Aufwand zu optimierenden Antennen-Diversityanlage.
Fig. 2:
   Anlage nach der Erfindung mit einem serienmäßigen Antennenmodul 40 mit getrennten Ausgängen für terrestrische- und Satellitensignale und einer logischen Schalteinrichtung am Empfängereingang.
Fig. 3:
   Anlage wie in Fig. 2, jedoch mit zwei serienmäßigen Antennenmodulen 40 zur voneinander entfernten Anbringung am Fahrzeug.
Fig. 4:
   Anlage mit modifiziertem Antennenmodul 40 zur getrennten Auskopplung von jeweils drei bzw. vier unterschiedlichen Antennensignalen an den Anschlüssen 49 und 48; mit Empfangspegel-Prüfeinrichtung 25 im Antennenmodul.
Fig. 5:
   Anlage wie in Fig. 4, jedoch mit wahlweiser Auskopplung der Signale des terrestrischen- bzw. des Satellitenpfads im Antennenmodul 40 jeweils an den Anschlüssen 49 und 48.
Fig. 6:
   Anlage mit zwei serienmäßigen Antennenmodulen 40, einem leicht modifizierten serienmäßigen Empfänger mit getrennten Eingängen für Satelliten- und terrestrische Signale, aus dem die Symboltaktsignale 18 und die Empfangspegel 30 ausgekoppelt und einem gesondert im Fahrzeug untergebrachten Selektormodul 52 zugeführt sind.
Fig. 7:
   Anlage wie in Fig. 6, jedoch mit einem leicht modifizierten serienmäßigen Empfänger mit nur einem Eingang für Satelliten- und terrestrische Signale.
Fig. 8:
   Anlage mit leicht modifiziertem serienmäßigen Antennenmodul 40 zur wahlweisen Auskopplung der Signale am terrestrischen- bzw. Satellitenpfad und mit serienmäßigem leicht modifierten Empfänger 3 mit nur einem Hochfrequenzeingang.
Fig. 9:
   Anlage wie in Fig. 8 mit einem modifiziertem Antennenmodul 40 zur wahlweisen Auskopplung von Signalen aus dem terrestrischen Pfand, zur getrennten Auskopplung von Signalen der Elementarstrahler des Satellitenpfads sowie von Signalen des kombinierten Satellitenpfads.
Fig. 10:
   Anlage mit mehreren einfachen Antennenmodulen mit kombinierten Strahlern für terrestrische- und Satellitensignale, einem getrennt im Fahrzeug angebrachten Selektormodul 52 und einem leicht modifizierten serienmäßigen Empfänger 3 mit getrennten Eingängen für Satelliten- und terrestrische Signale.
Fig. 11:
   Anlage wie in Fig. 10, jedoch mit einem leicht modifizierten serienmäßigen Empfänger mit nur einem Hochfrequenzeingang für alle Signale.

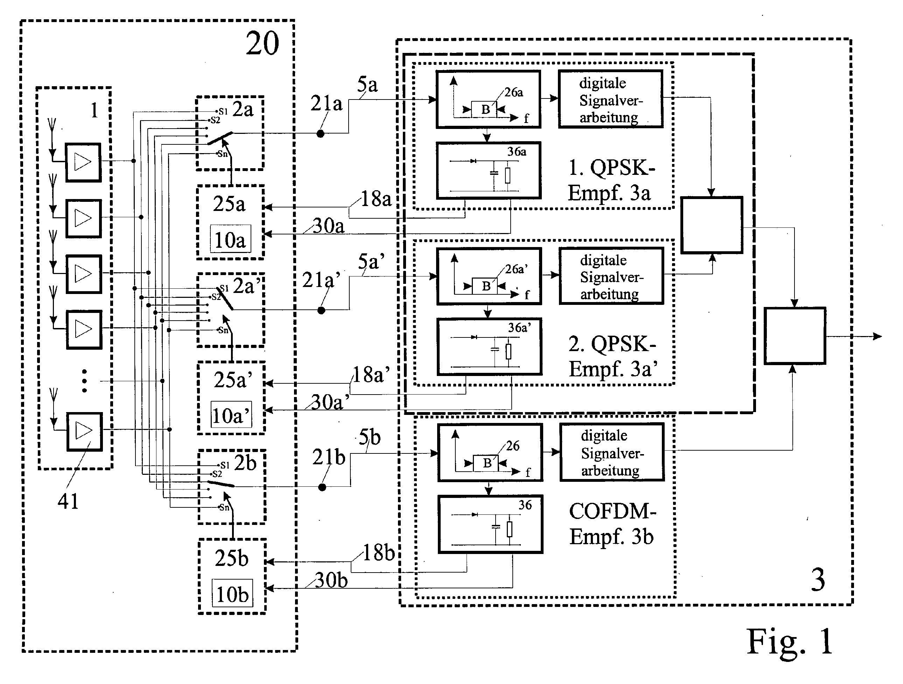

Die grundsätzliche Wirkungsweise der Diversity- Empfangsanlage wird anhand von Fig. 1 veranschaulicht. Jedem Frequenzkanal ist ein gesonderter Kanal-Empfänger 3a,3a',3b mit Empfangssignalpegelindikator 36a,a',b, eine Empfangspegel-Prüfeinrichtung 25a,a',b und eine logische Schalteinrichtung (2a,a',b) mit jeweils gesondertem Zugriff auf alle aus der Antennenanlage 1 verfügbaren Signale zugeordnet. Aufgrund der Überlagerung aller digital empfangenen Informationen am Ausgang der Kanal-Empfänger 3a,3a',3b bei dekorreliert wirkenden z Antennen in der Antennenanlage 1 ergibt sich eine Diversityeffizienz von 3-z und ein Δn_{ges} = 3·(z - 1). Empfänger 3 nach dem SDARS-Standard stehen in dieser Form nicht zur Verfügung. Ferner ist der Aufwand an Hochfrequenleitungen 46 relativ groß.

Der besondere Vorteil der in den weiteren Figuren beschriebenen Anordnungen beruht auf der Verwendung möglichst vieler serienmäßig verfügbarer Baugruppen in der Diversityanlage. Es wird somit angestrebt, die Antennendiversityfunktion, deren Effizienz durch Δn_{ges} gekennzeichnet ist, durch möglichst wenig aufwändige Zusätze zu den in großen Stückzahlen für SDARS-Empfangsanlagen ohne Diversityfunktion serienmäßig hergestellten Baugruppen zu erreichen. Selbstverständlich ist das Satellitenrundfunksystem SDARS im Zusammenhang mit der vorliegenden Erfindung als Beispiel zu sehen und es ist gewählt worden, um konkret die Leistungsfähigkeit des erfindungsgemäßen Antennendiversitysystems aufzuzeigen. Auf jedes ähnlich gestaltete Satellitenrundfunksystem lassen sich die Lehren der vorliegenden Erfindung entsprechend anwenden.

In Fig. 2 wird deshalb ein serienmäßig verfügbares Antennenmodul 40 mit getrenntem Anschluß für terrestrische Signale 48 und einem Anschluß für Satellitensignale 49 verwendet. Ein derartiges Antennenmodul ist z.B. beschrieben in Patsiokas et al.: XM Satellite.; SAE 2001-01-1328; ISSN 0148-7191,3/2001. Mehrere unerschiedliche Bauformen von Antennenmodulen mit ähnlichen Eigenschaften jedoch meist kleinerer Bauform haben sich in der Zwischenzeit auf dem Markt durchgesetzt. Für derartige Antennenmodule stehen serienmäßig Empfänger zur Verfügung mit einem gemeinsamen Eingang für die beiden Satellitensignale und einem gesonderten Eingang für die terrestrisch ausgestrahlten Signale. In Fig. 2 ist für die Gestaltung eines Antennendiversitysystems nach der Erfindung deshalb ein nur leicht modifizierter serienmäßig verfügbarer Empfänger mit getrennten HF-ZF-Teilen 42 für jeden Satellitenkanal und den terrestrischen Kanal mit getrennten Empfangspegel-Prüfeinrichtungen 25 zur Ansteuerung von jeweils einer logische Schalteinrichtung am Empfängereingang 47 vorgesehen. Der Eingang des Empfängers ist in der Weise durch eine logische Schalteinrichtung 47 mit den entsprechend zugeordneten logischen Schalteinrichtungen 47a,a',b modifiziert, daß für jeden Satellitenkanal und den terrestrischen Kanal durch Auswahl eines am Anschluß für terrestrische Signale 48 bzw. am Anschluß für Satellitensignale 49 vorliegenden Signals zwei voneinander unabhängige Signale zur Verfügung stehen. Zusätzlich sind die wenig aufwändige Gleichrichterschaltung zur Feststellung des Zwischenfrequenzpegels in Form der Empfangssignalpegelindikatoren 36a,a',b, welche jedem der Kanäle im Empfänger zugeordnet ist und jeweils eine Empfangspegel-Prüfeinrichtung 25a,a',b zur Ansteuerung der logischen Schalteinrichtungen am Empfängereingang 47a,a',b vorgesehen. Aufgrund der Dekorrelation der an diesen Anschlüssen vorliegenden Signale in jedem der Bänder ist somit für jeden der Satellitenkanäle bzw. den terrestrischen Kanal im Empfänger eine Diversityeffizienz von nₛ₁ = 2, nₛ₂ = 2 bzw. nₜ = 2 von jeweils 2 gegeben, so dass sich Δn_{ges} = 3·2 - 3 = 3 ergibt. Vor dem Hintergrund des Aufwandes, der mit der Ausgestaltung des Rundfunksystems mit zwei Satelliten- und einem terrestrischen Kanal im Zusammenhang steht, wobei sich ohne Antennendiversity eine Diversityeffizienz von n_{SDARS} = 3 als Referenzwert einstellt, ist der mit Antennendiversity verbundene Aufwand, welcher einen Zuwachs an Effizienz von ebenfalls 3 ergibt - gemessen am empfängerseitigen Normalaufwand - relativ gering. Die logische Schalteinrichtung am Empfängereingang 47 kann dabei aufwandsarm am Eingang des Empfängers eingebracht werden. Bemerkenswert ist auch, dass sich im Hinblick auf teure Hochfrequenzleitungen 46 diesbezüglich kein weiterer Leitungsaufwand im Fahrzeug ergibt.

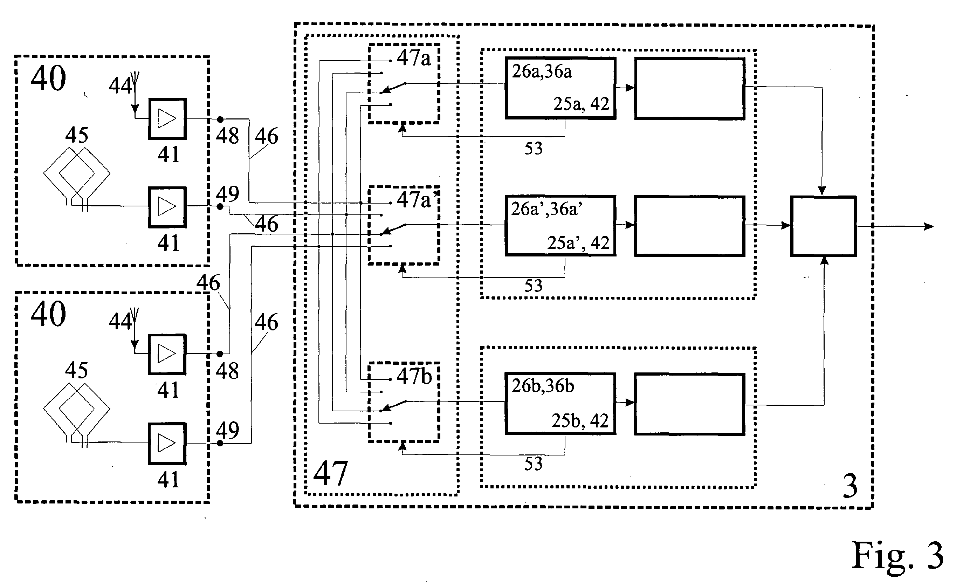

Ist ein Bereich des Fahrzeugs abgeschattet, so kann erfindungsgemäß, wie in Fig. 3 dargestellt, z.B. ein serienmäßig verfügbares Antennenmodul 40 im Frontbereich und ein weiteres im Heckbereich des Fahrzeugs angebracht werden. Die Antennenmodule 40 besitzen getrennte Ausgänge für terrestrische- und Satellitensignale. Insbesondere bei Fahrzeugen ohne ein festes Dach, wie z.B. bei Cabriolets, ist eine derartige Ausstattung vorteilhaft. Bei der in Fig. 3angegebenen Anordnung besitzt der modifizierte SDARS-Empfänger eine logische Schalteinrichtung am Empfängereingang 47 mit vier Hochfrequenzeingängen mit getrenntem Zugriff aller Kanäle auf alle Signale, die von den beiden Antennen verfügbar sind. Aufgrund der Dekorrelation sämtlicher von den Antennen gelieferter Signalen, welche jeweils getrennt für alle Kanäle zur Verfügung stehen, ergibt sich aufgrund des Antennendiversity ein Δn_{ges} = 3·4 - 3 = 9. Diese hohe zusätzliche Diversityeffizienz bedingt jedoch den Einsatz der aufwändigere Hochfrequenzleitungen 46 zum Satellitenempfänger.

In einer weiteren vorteilhaftung Ausgestaltung der Erfindung kommt in Fig. 4 ein nur leicht modifizierter serienmäßig verfügbarer Empfänger 3 mit zwei Hochfrequenzeingängen zum Einsatz. Aus dem Empfänger wird für jeden der Kanäle lediglich jeweils der Symboltaktsignal 18 und der Empfangspegel 30 herausgeführt und über wenig aufwendige Steuerleitungen dem Antennemodul 40 zugeführt, in dem sowohl die Empfangspegel-Prüfeinrichtung 25a,a',b als auch die logische Schalteinrichtung 50 sowie ggfs. ein Umschalter 51 vorhanden ist. Im Antennenmodul 40 sind ein Elementarstrahler für vertikale Polarisation 44 und ein erster Elementarstrahler 45a und zweiter Elementarstrahler 45b der Strahlerkombination für zirkulare Polarisation 45 vorgesehen. Ein Umschalter im Antennenmodul 51 ermöglicht sowohl den getrennten Zugriff auf den ersten (45a) als auch auf den zweiten (45b) Elementarstrahler der Strahlerkombination für zirkulare Polarisation 45 als auch auf die Strahlerkombination für zirkulare Polarisation 45 selbst. Diese Signale werden erfindungsgemäß zusammen mit den Signalen, welche vom Elementarstrahler für vertikalen Polarisation 44 aufgenommen werden über die logische Schalteinrichtung 50 dem Anschluß für Satellitensignale 49 wechselweise und unabhängig voneinander zugeführt. Ebenso stehen diese Signale unabhängig von den Signalen am Anschluß für Satellitensignale 49 dem Anschluß für terrestrische Signale 48 in Abhängigkeit von den Umschaltsignal 53 zur Auswahl zur Verfügung. Aus der Anordnung geht hervor, dass das dem HF-ZF-Teil 42b für terrestrischen Empfang zugeleitete Signal aus den vier derart gebildeten Signalen mit der größten Amplitude ausgewählt wird. Unter Berücksichtigung der teilweisen Korrelation der Signale zwischen einem der Elementarstrahler 45a, 45b und dem Signal an der Strahlerkombination 45 für zirkulare Polarisation 45b selbst, ergibt sich für den terrestrischen Pfad eine Diversityeffizienz von nₜ = 3,2. Das Signal kann am Anschluß für Satellitensignale 49 erfindungsgemäß über die Steuerung des Diversitysystems derart ausgewählt werden, dass jeweils dasjenige Signal am Anschluß für Satellitensignale 49 erscheint, welches die größte Anzahl aus den beiden Satellitensignalen, welche die Minimalspannung überschreiten, enthält. Für die beiden Satellitenkanäle ergibt sich dabei jeweils eine kleinere Diversityeffizienz von nₛ₁ = nₛ₂ = 2,5. Die gesamte Diversityeffizienz n_{ges} = nₜ + nₛ₁ + nₛ₂ = 8,2 und Δn_{ges} = 5,2. Diese Anordnung ist mit dem besonderen Vorteil verbunden, dass im serienmäßigen Empfänger eine äußerst gering aufwändige Modifizierung zu erfolgen hat und die hohe Diversityeffizienz durch elektronische Maßnahmen im Antennenmodul 40 erreicht wird. Für die Entkopplung der Elementarstrahler bzw. für die Kompensation von Leistungsaufteilungen und Leitungsdämpfungen sind in den Antennenmodulen HF-Antennenverstärker vorgesehen.

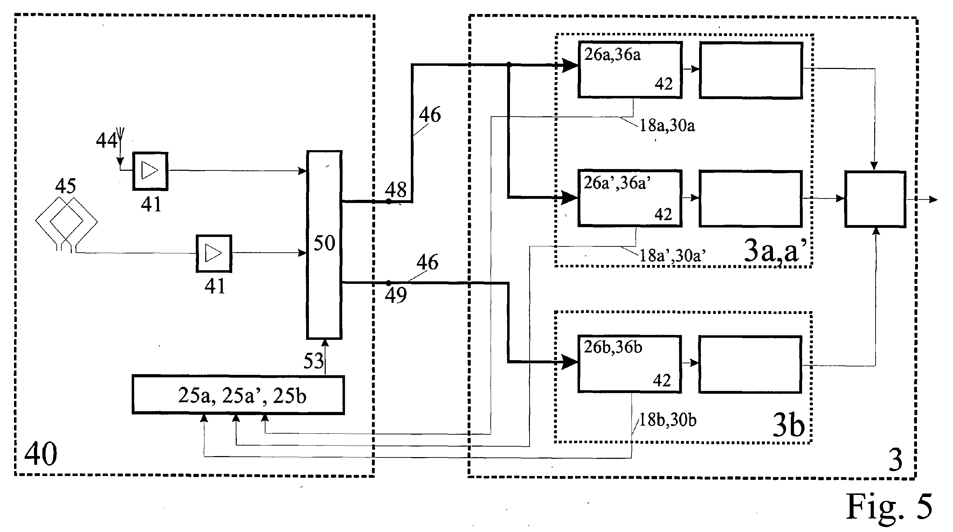

Die Empfängereinrichtung in Fig. 5 ist identisch mit der in Fig. 4. Im Interesse eines weniger aufwändigen Antennenmoduls 40 ist dieses im wesentlichen gestaltet wie eine serienmäßige Antenne mit einem getrennten Anschluß für terrestrische Signale 48 und einem Anschluß für Satellitensignale 49. Das serienmäßige Antennenmodul ist somit nur dahingehend ergänzt, als die Signale am Ausgang des Satellitenpfads und am Ausgang des terrestrischen Pfads in der Antenne der logischen Schalteinrichtung 50 im Antennenmodul 40 zur alternativen Zuleitung jeweils dem Anschluß für terrestrische Signale 48 und dem Anschluß für Satellitensignale 49 zugeführt sind. Die Auswahl des Signals aus dem terrestrischen Pfad bzw. Satellitenpfad im Antennenmodul 40 erfolgt durch Ansteuerung der logischen Schalteinrichtung mit der Empfangspegel-Prüfeinrichtung 25. Der Unterschied zu der Anordnung in Fig. 4 ergibt sich aus der geringeren Anzahl der in der Antenne verfügbaren Signale. Denn sowohl am Anschluß für Satellitensignale 49 als auch am Anschluß für terrestrische Signale 48 stehen unabhängig voneinander die optimalen Signale für die beiden Satellitenkanäle einerseits und dem terrestrischen Kanal andererseits zur Verfügung. Aufgrund der Dekorrelation der Signale am Anschluß für terrestrische Signale 48 ergibt sich für den terrestrischen Pfad eine Diversityeffizienz von nₜ = 2. Für die beiden Satellitenkanäle ergibt sich dabei jeweils die aus den genannten Gründen kleinere Diversityeffizienz von nₛ₁ = nₛ₂ = 1,7. Die gesamte Diversityeffizienz ist somit n_{ges} = nₜ + nₛ₁ + nₛ₂ = 5,4 und Δn_{ges} = 2,4. Diese Anordnung ist im Hinblick auf den Aufwand besonders vorteilhaft, weil im Antennenmodul 40 über die Serienausstattung hinaus lediglich einen einfache logische Schalteinrichtung 50 vorgesehen ist, welche von einer Empfangspegel-Prüfeinrichtung 25 angesteuert wird. Aufgrund des geringen Mehraufwandes für die Antennendiversity-Funktion und des beachtlichen Zuwachses an Diversityeffizienz Δn_{ges} = 2,4 erscheint diese Anordnung besonders vorteilhaft.

Im Interesse einer günstigen Verlegung der Hochfrequenzleitungen 46 im Fahrzeug ist es insbesondere bei solchen Fahrzeugen, welche aus Baugründen mehrere voneinander entfernte Montageorte der Antennenmodul 40 erfordern, notwendig, an einer günstigen Stelle im Fahrzeug einen von Antenne und Empfänger getrenntes Selektormodul 52 einzusetzen. Eine derartige Anordnung ist in Fig.5 dargestellt. Besonders vorteilhaft ist die Verwendung serienmäßig verfügbarer Antennenmodule 40 für SDARS-Systeme mit einem getrennten Anschluß für terrestrische Signale 48 und einem Anschluß für Satellitensignale 49, deren Signale z.B. jeweils einer im Selektormodul 52 vorhandenen logische Schalteinrichtung 2a,b zugeleitet werden. Der Empfänger 3 besitzt, wie serienmäßig üblich, einen Eingang für beide Satellitenkanäle und einen Eingang für den terrestrischen Kanal. Jedem dieser Eingänge stehen somit die vier Antennensignale zur getrennten und freien Auswahl zur Verfügung. Aufgrund der Dekorrelation aller von den Antennen gelieferten Signale beträgt die Diversityeffizienz des terrestrischen Kanals nₜ = 4. Für die beiden Satellitenkanäle ergibt sich dabei jeweils eine Diversityeffizienz von nₛ₁ = nₛ₂ = 2,8. Die gesamte Diversityeffizienz ist somit n_{ges} = nₜ + nₛ₁ + nₛ₂ = 9,6 und Δn_{ges} = 6,6. Dieser Wert wird auch bereits bei kleinem Abstand zwischen den Montageorten der Antennenmodule 40 erreicht, sofern dieser nicht wesentlich kleiner als eine Wellenlänge beträgt. Dadurch kann der Aufwand an Hochfrequenzleitungen zwischen den Modulen und dem Selektormodul klein gehalten werden.

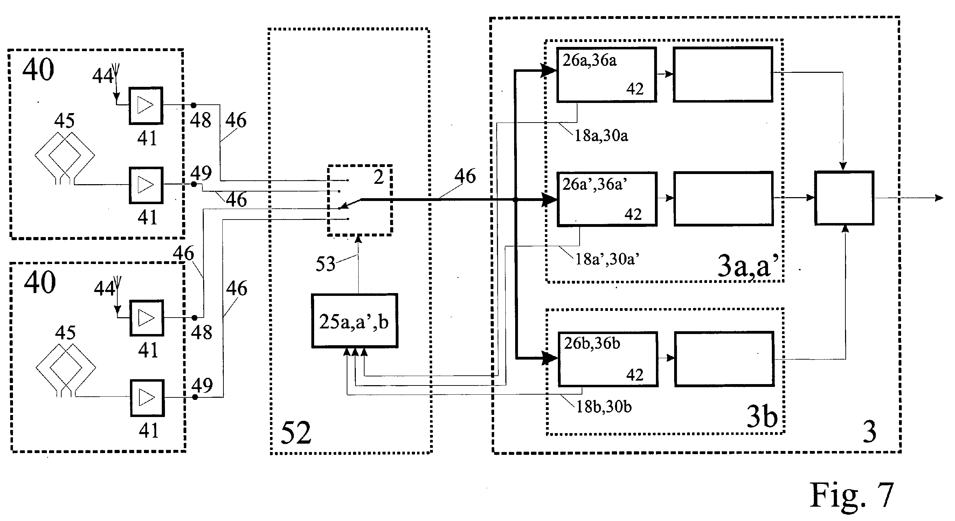

Im Interesse einer Kostenreduzierung werden serienmäßig auch solche SDARS-Empfänger 3 serienmäßig eingesetzt, welche nur einen Hochfrequenzeingang für alle Satelliten- und terrestrischen Kanäle besitzen. Die Anordnung, die sich bei einer vorteilhaften Verwendung eines solchen Empfängers mit zwei voneinander getrennt angebrachten serienmäßigen Antennenmodulen 40 ergibt, ist in Fig. 7 dargestellt. Im Gegensatz zu der Anordnung in Fig. 6 wird über die im Selektormodul 52 vorhandenen Empfangspegel-Prüfeinrichtung 25 zu jedem Zeitpunkt ein Signal zur Weiterleitung an den Empfänger 3 ausgewählt. Erfindungsgemäß geschieht dies in der Weise, dass aus den vier verfügbaren Antennensignalen jeweils dasjenige ausgewählt wird, welches die größte Anzahl aus den Satelliten- und terrestrischen Signalen sicher empfängt. Insbesondere bei großem Abstand zwischen dem Selektormodul 52 und dem Empfänger 3 ist die dabei gewonnene Ersparnis an Hochfrequenzleitung 46 bedeutsam. Bei Dekorrelation aller von den Antennen gelieferten Signalen beträgt die Diversityeffizienz der Satellitensignale und der terrestrischen Signale nₛ₁ = nₛ₂ = nₜ = 2,4. Die gesamte Diversityeffizienz ist somit n_{ges} = 7,2 und Δn_{ges} = 4,2. Eine solche Anordnung ist insbesondere dann von Vorteil, wenn die beiden serienmäßigen Antennen unweit, jedoch in Bezug auf die Wellenlänge in hinreichendem Abstand voneinander am Fahrzeug montiert sind, so dass die Kabelverbindungen zwischen den Antennen und dem Selektormodul 52 wenig aufwändig gestaltet werden können und der Aufwand an Hochfrequenzleitung 46 aufgrund des einzigen Empfängereingangs gering ist.

Eine besonders aufwandsarme Diversityanlage nach der Erfindung ist in Fig. 8 dargestellt. Dort wird ein nur geringfügig um eine logische Schalteinrichtung 50 mit Empfangspegel-Prüfeinrichtung 25 ergänztes serienmäßig verfügbares Antennenmodul 40 eingesetzt. Der Empfänger 3 ist mit nur einem Hochfrequenzeingang ausgeführt. Entsprechend gering ist der erforderliche Aufwand durch die einzige Hochfrequenzleitung 46. An der einzigen Antennenanschlussstelle 21 stehen wechselweise die Signale aus dem terrestrischen- und dem Satellitenpfad zur Verfügung. Die für alle Kanäle sich ergebende Diversityeffizienz beträgt nₜ = nₛ₁ = nₛ₂ = 1,5. Somit ergibt sich Δn_{ges} = 1,5. Obgleich der Zuwachs an Diversityeffizienz durch die Antennenanlage im Vergleich zu den vorgenannten Beispielen gering ist, ist dies an dem geringen Mehraufwand zu messen und erscheint im Vergleich zu dem Aufwand, der z.B. mit der Errichtung eines weiteren Kanals verbunden wäre, durchaus vertretbar.

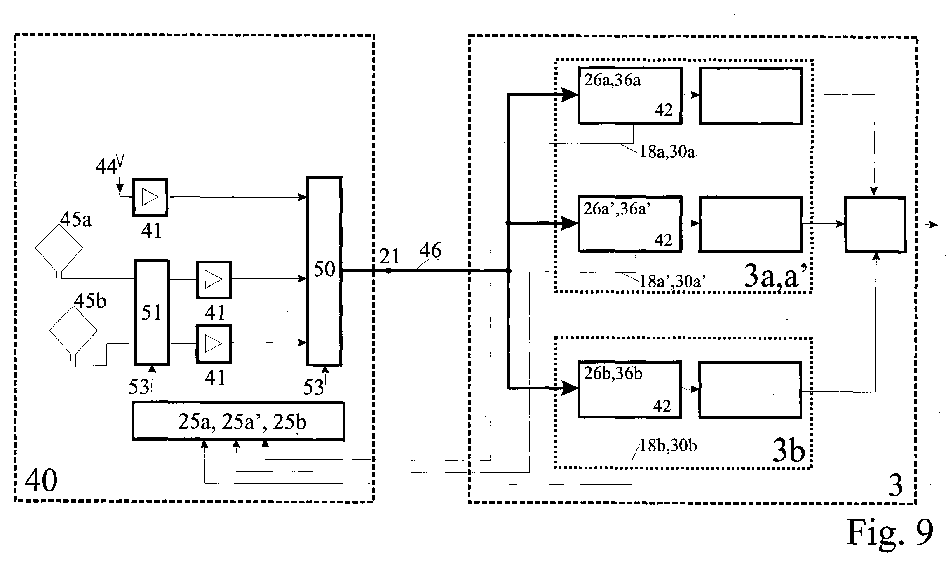

Eine weitere vorteilhafte Ausgestaltung einer Anlage nach der Erfindung ist in Fig. 9 dargestellt. Hierin wird ein Antennenmodul 40 wie in Fig. 4 verwendet und ein Empfänger 3 mit nur einem Hochfrequenzeingang wie in Fig. 8 beschrieben. Hierbei ergibt sich bei besonders kleinem Aufwand an Hochfrequenzleitung 46 aufgrund der grösseren Zahl der wechselweise verfügbaren Antennensignale am Antennenanschlussstelle 21 eine bessere Diversityeffizienz als mit der Anordnung in Fig. 8. Diese wird mit Hilfe des größeren Aufwands im Antennenmodul 40 der Fig. 9 gewonnen. Die für alle Kanäle sich ergebende Diversityeffizienz beträgt nₜ = nₛ₁ = nₛ₂= 2,2. Somit ergibt sich Δn_{ges} = 3,6. Der nennenswerte Zuwachs an Diversityeffizienz im Vergleich zu der Anordnung in Fig.7 wird durch die elektronischen Maßnahmen, wie durch die logische Schalteinrichtung 50, zusammen mit dem Umschalter 51 im Antennenmodul 40 erreicht. Vorteilhaft ist bei dieser Lösung der geringe Aufwand an Hochfrequenzleitungen in Verbindung mit der Notwendigkeit von nur einem Montageort für die Antenne am Fahrzeug.

Insbesondere aus der Automobilindustrie kommt der Wunsch nach möglichst unauffälligen Antennen. Es wird deshalb erfindungsgemäß vorgeschlagen anstelle der bisher vorgestellten Antennen mit besonderen Eigenschaften für den Satellitenempfang und den terrestrischen Empfang unauffällige und einfachere Antennenelemente in Form eines kombinierten Strahlers für terrestrische und Satellitensignale 54 zu verwenden, welche in größerer Zahl an verschiedenen Einbauorten am Fahrzeug, angebracht werden. Hierfür sind auch bekannte Patchantennen vorzüglich geeignet. Eine Anordnung mit vier Strahlern auf den Fensterscheiben eines Fahrzeugs führt zu Fahrzeug integrierten Antennen. In Fig. 10 ist eine Antennenanlage mit mehreren einfachen Einzelantennen dargestellt, deren Funktionsprinzip der Anlage in Fig. 6 gleichkommt. Aufgrund der Dekorrelation aller von den Antennen gelieferter Signale beträgt die Diversityeffizienz des terrestrischen Kanals nₜ = 4. Für die beiden Satellitenkanäle ergibt sich dabei jeweils eine Diversityeffizienz von nₛ₁ = nₛ₂ = 2,8.
Die gesamte Diversityeffizienz ist somit n_{ges} = nₜ + nₛ₁ + nₛ₂ = 9,6 und Δn_{ges} = 6,6. Eine derartige Anordnung besitzt die Eigenschaft, dass bei günstiger sektoraler diversitätsmäßiger Abdeckung aller Raumrichtungen der Empfang auch in Gebieten ohne Rayleigh-Verteilung, also direktem Einfall der Satelliten- und terrestrischen Signale, gewährleistet ist und somit fahrzeugintegrierte Antennen möglich sind.

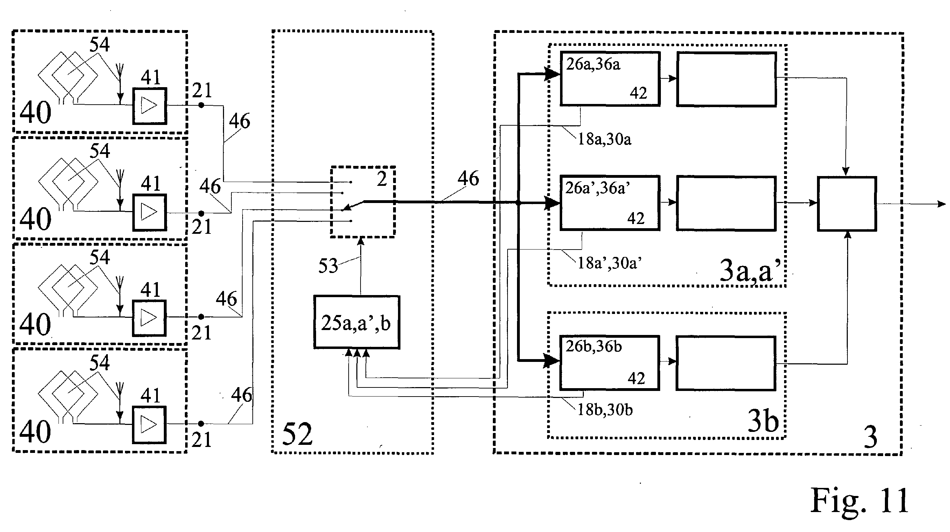

In Fig. 11 ist eine vorteilhafte Ausgestaltung der Antennenanlage in Fig. 10, jedoch mit einem Empfänger mit nur einem Hochfrequenzeingang dargestellt. Hierbei entfällt eine Hochfrequenzleitung 46 zwischen dem Selektormodul 52 und dem Empfänger 3. Die für alle Kanäle sich ergebende Diversityeffizienz beträgt nₜ = nₛ₁ = nₛ₂ = 2,4. Somit ergibt sich Δn_{ges} = 4,2.

### Diversity-Anlage zum Empfang digitaler Satellitenrundfunksignale

### Liste der Bezeichnungen

- 1: Antennenanlage
- 2: logische Schalteinrichtung
- 3: Empfänger
- 3a,3a',3b: Kanal-Empfänger
- 4a,4b,4c..: Antennenteile
- 5a,a',b: Empfangssignal
- 18: Symboltaktsignal
- 20: Antennenanordnung
- 21: Antennenanschlussstelle
- 25: Empfangspegel-Prüfeinrichtung
- 30a,a'b: Empfangspegel
- 36: Empfangssignalpegel-Indikator
- 40: Antennenmodul
- 41: HF-Antennenverstärker
- 42: HF-ZF-Teil
- 44: Elementarstrahler für vertikale Polarisation
- 45: Strahlerkombination für zirkulare Poarisation
- 45a: erster Elementarstrahler der Strahlerkombination 45
- 45b: zweiter Elementarstrahler der Strahlerkombination 45
- 46: Hochfrequenzleitung
- 47 a,a',b: logische Schalteinrichtung am Empfängereingang
- 48: Anschluß für terrestrische Signale
- 49: Anschluß für Satellitensignale
- 50: logische Schalteinrichtung im Antennenmodul 40
- 51: Umschalter im Antennenmodul 40
- 52: Selektormodul
- 54: kombinierter Strahler für terrestrische und Satellitensignale

- S1,S2,S3..: diskret verfügbare Schaltstellungen
- λ: Wellenlänge, Freiraumwellenlänge
- f: Trägerfrequenz

## Patentansprüche

1. Diversity - Empfangsanlage für digitale Satellitenrundfunksignale nach dem SDARS - oder einem ähnlichen Standard für den zur Verbesserung der Übertragungssicherheit gleichzeitigen und koordinierten Empfang von digital modulierten Satellitenrundfunksignalen (5a) eines ersten Satelliten nach dem M-PSK-Verfahren und von digital modulierten Satellitenrundfunksignalen (5a') eines zweiten Satelliten nach dem M-PSK-Verfahren sowie von digital modulierten nach dem COFDM-Verfahren von terrestrischen Funkstellen ausgestrahlten Empfangssignale (5b) in benachbarten Hochfrequenzbändern der gleichen HF-Kanalbandbreite B, wobei jeweils derselbe, aber durch Laufzeiten versetzte Signalinhalt über eine Antennenanordnung (20) zu einem Empfänger (3) gelangt, der jeweils getrennte Empfangszweige (3a,a',b) für jeden der drei Funkkanäle besitzt und nach dem Überlagerungsprinzip gestaltet ist, für jeden Empfangszweig (3a,a',b) ist eine Empfangspegel-Prüfeinrichtung (25a, 25a', 25b), vorhanden, welcher jeweils der Symboltakt (18a, 18a',18b) des zugehörigen Funkdienstes zugeführt ist, in der Empfangsanlage sind für alle drei Frequenzbereiche eine steuerbare logische Schalteinrichtung (2a, 2a', 2b) vorhanden und im Empfänger (3) sind aus der Datenübertragung über den terrestrischen Empfangszweig (3b) und aus der Datenübertragung über die beiden Satelliten- Empfangszweig (3a,a') alle Datenmengen zu einer Nachricht zusammengefaßt, wobei die Empfangspegel-Prüfeinrichtungen (25a, 25a', 25b) und die steuerbaren logischen Schalteinrichtungen (2a, 2a', 2b) durch Auswahl unterschiedlicher Empfangssignale aus der Antennenanlage (20) derart gestaltet sind, daß die Empfangspegel aller Empfangssignale (5a,a',b) durch schnelle sequentielle Weiterschaltung der steuerbaren logischen Schalteinrichtungen (2a, 2a', 2b) während der Fahrt schnell vergleichend erfaßt sind und diejenige Schaltstellung (S1,S2...) der logischen Schalteinrichtungen (2a, 2a', 2b) über ein an der Fahrgeschwindigkeit und der Wellenlänge λ ausgerichtetes Zeitintervall festgehalten ist, in der die Summe der mit einem für die sichere Detektion der digitalen Information notwendigen Mindestpegel empfangenen Empfangssignale (5a,a',b) möglichst groß ist, und die Antennen-Diversityfunktion durch Einsatz von nur wenig modifizierten, serienmäßig verfügbaren Komponenten aus üblichen Empfangsanlagen ohne Diversityfunktion, realisiert ist.

2. Diversity- Empfangsanlage nach Anspruch 1
**gekennzeichnet durch**
- ein serienmäßiges Antennenmodul (40) mit einem Signalpfad für den Empfang von Satellitensigalen und einem davon getrennten Signalpfad für den Empfang von terrestrischen Signalen mit getrennten Ausgängen (49,48) für terrestrische und Satellitensignale
- sowie einen modifizierten serienmäßigen Empfänger (3) mit einem Hochfrequenzeingang für Satellitensignale und einem Hochfrequenzeingang für terrestrische Signale und mit getrennten HF-ZF-Teilen (42) für jeden Satellitenkanal und den terrestrischen Kanal,
- wobei der Empfänger getrennte Empfangspegel-Prüfeinrichtungen (25a,25a',25b) am Empfängereingang zur Ansteuerung von jeweils einer logischen Schalteinrichtung (47a,47a',47b) mit je zwei Hochfrequenzeingängen zur jeweiligen Auswahl eines am Anschluß für terrestrische Signale (48) bzw. am Anschluß für Satellitensignale (49) des Antennenmoduls (40) vorliegenden und über die Hochfrequenzleitungen (46) zugeleiteten günstigsten Signals besitzt (Fig. 12).

3. Diversity- Empfangsanlage nach Anspruch 2
**gekennzeichnet durch**
- zwei serienmäßigen Antennenmodule (40) und einen modifizierten serienmäßigen Empfänger (3) mit vier Hochfrequenzeingängen, dem die Signale an den Anschlüssen für terrestrische Signale (48) bzw. der an den Anschlüssen für Satellitensignale (49) vorliegenden Signale über getrennte Hochfrequenzleitungen (46) zugeführt sind und
- die logische Schalteinrichtung (47a,47a',47b) am Empfängereingang, die derart gestaltet ist, dass über die Diversityfunktion zu jedem HF-ZF-Teil (42) das günstigste Signal durchgeschaltet ist. (Fig. 13).

4. Diversity- Empfangsanlage nach Anspruch 3
**dadurch gekennzeichnet, dass**
- ein modifiziertes Antennenmodul (40) mit einem Elementarstrahler (44) für vertikale Polarisation und einem erstem Elementarstrahler (45a) und einem zweiten Elementarstrahler (45b) der Strahlerkombination für zirkulare Polarisation (45) und mit einem Umschalter (51) in der Weise gestaltet ist, daß sowohl der getrennte Zugriff auf die Empfangssignale des ersten (45a) als auch auf die des zweiten (45b) Elementarstrahlers der Strahlerkombination für zirkulare Polarisation (45) als auch auf die Signale der Strahlerkombination für zirkulare Polarisation (45) selbst alternativ gegeben ist und
- daß die Signale des Elementarstrahlers für vertikale Polarisation (44) ebenso wie die aus der Strahlerkombination für zirkulare Polarisation (45) abgeleiteten drei verschiedenen Signale alternativ einer logischen Schalteinrichtung (50) zugeführt sind, an deren Ausgang sowohl ein Anschluß für terrestrische Signale (48) als auch ein Anschluß für Satellitensignale (49) gebildet ist, so dass alle genannten Signale mit Hilfe der im Antennenmodul (40) vorhandenen Empfangspegel-Prüfeinrichtung (25a,25a',25b) an jedem dieser Anschlüsse (48,49) anwählbar sind und
- daß ein wenig modifizierter serienmäßiger Empfänger (3) mit einem Hochfrequenzeingang für Satellitensignale und einem Hochfrequenzeingang für terrestrische Signale vorhanden ist, aus welchem die Empfangspegel (30a,a',b) und die Symboltaktsignale (18a,18a',18b) herausgeführt und dem Antennenmodul (40) zugeführt sind. (Fig. 14)

5. Diversity- Empfangsanlage nach Anspruch 4
**dadurch gekennzeichnet, dass**
das Antennenmodul (40) im wesentlichen wie serienmäßig mit einem Signalpfad für Satellitensignale mit einer Strahlerkombination für zirkulare Polarisation (45) und mit einem Signalpfad für terrestrische Signale mit einem Elementarstrahler für vertikale Polarisation (44) gestaltet ist und daß die Signale der beiden Signalpfade der logischen Schalteinrichtung (50) zugeführt sind, an deren Ausgang sowohl ein Anschluß für terrestrische Signale (48) als auch ein Anschluß für Satellitensignale (49) gebildet ist, so dass die Signale beider Signalpfade mit Hilfe der im Antennenmodul (40) vorhandenen Empfangspegel-Prüfeinrichtung (25a,25a',25b) an jedem dieser Anschlüsse (48,49) anwählbar sind. (Fig. 15)

6. Diversity- Empfangsanlage nach Ansprüchen 8 bis 15 und nach Ansprüchen 24 bis 26 für den Empfang von 2 digital modulierten Satellitensignalen und eines digital modulierten terrestrischen Signals nach dem SDARS- oder einem ähnlichen Standard
**Gekennzeichnet durch**
- zwei serienmäßige, voneinander getrennt am Fahrzeug angebrachte Antennenmodule (40), mit jeweils einem Signalpfad für den Empfang von Satellitensigalen und einem davon getrennten Signalpfad für den Empfang von terrestrischen Signalen mit getrennten Ausgängen (49,48) für terrestrische- und Satellitensignale, deren insgesamt vier Ausgangssignale jeweils einem Selektormodul (52) mit jeweils zwei logischen Schalteinrichtungen (2a,2b) und Empfangspegel-Prüfeinrichtungen (25a,a',b) zugeführt sind
- einen wenig modifizierten serienmäßigen Empfänger (3) mit einem Hochfrequenzeingang für Satellitensignale und einem Hochfrequenzeingang für terrestrische Signale, aus dem die Empfangspegel (30a,a',b) und die Symboltaktsignale (18a,18a',18b) herausgeführt und den Empfangspegel-Prüfeinrichtungen (25a,a',b) im Selektormodul (52) zugeführt sind und
- wobei der Ausgang jeder logischen Schalteinrichtungen (2a,2b) mit dem entsprechenden Hochfrequenzeingang des Empfängers über eine Hochfrequenzleitung (46) verbunden ist. (Fig. 16)

7. Diversity- Empfangsanlage nach Anspruch 6
**gekennzeichnet durch**
- einen wenig modifizierten serienmäßigen Empfänger (3) mit nur einem gemeinsamen Hochfrequenzeingang mit Signalverzweigung für Satellitensignale und für terrestrische Signale, aus welchem die Empfangspegel (30a,a',b) und die Symboltaktsignale (18a,18a',18b) herausgeführt und den Empfangspegel-Prüfeinrichtungen (25a,a',b) im Selektormodul (52) zugeführt sind und
- **dadurch**, daß im Selektormodul (52) nur eine logische Schalteinrichtung (2) vorhanden ist, deren Ausgang mit dem Hochfrequenzeingang des Empfängers (3) über eine Hochfrequenzleitung (46) verbunden ist. (Fig. 17)

8. Diversity- Empfangsanlage nach Anspruch 7
**dadurch gekennzeichnet, dass**
- ein Antennenmodul (40) im wesentlichen wie serienmäßig mit einem Signalpfad für Satellitensignale mit einer Strahlerkombination für zirkulare Polarisation (45) und mit einem Signalpfad für terrestrische Signale mit einem Elementarstrahler für vertikale Polarisation (44) ausgestaltet ist und
- die Signale der beiden Signalpfade der logischen Schalteinrichtung (50) im Antennenmodul (40) zugeführt sind, an deren Ausgang eine Antennenanschlussstelle (21) gebildet ist, so dass die Signale beider Signalpfade mit Hilfe der im Antennenmodul (40) vorhandenen Empfangspegel-Prüfeinrichtung (25a,25a',25b) an dieser Antennenanschlussstelle (21) alternativ anwählbar sind und über die Hochfrequenzleitung (46) einem wenig modifizierten serienmäßigen Empfänger (3) mit nur einem gemeinsamen Hochfrequenzeingang mit Signalverzweigung für Satellitensignale und für terrestrische Signale zugeführt sind
- wobei die Empfangspegel (30a,a',b) und die Symboltaktsignale (18a,18a',18b) aus dem Empfänger (3) herausgeführt und den Empfangspegel-Prüfeinrichtungen (25a,a',b) im Antennenmodul (40) zugeführt sind. (Fig. 18)

9. Diversity- Empfangsanlage nach Anspruch 4
**dadurch gekennzeichnet, dass**
- ein modifiziertes Antennenmodul (40) nur eine Antennenanschlussstelle (21) mit alternativem Zugriff auf alle Signale der Elementarstrahler und der Strahlerkombination für zirkulare Polarisation (45) besitzt, die über eine Hochfrequenzleitung (46) mit einem wenig modifizierten serienmäßigen Empfänger (3) mit nur einem gemeinsamen Hochfrequenzeingang mit Signalverzweigung für Satellitensignale und für terrestrische Signale verbunden ist und
- daß die Empfangspegel (30a,a',b) und die Symboltaktsignale (18a,18a',18b) aus dem Empfänger (3) herausgeführt und den Empfangspegel-Prüfeinrichtungen (25a,a',b) im Antennemodul (40) zugeführt sind. (Fig. 19)

10. Diversity- Empfangsanlage nach Anspruch 6
**dadurch gekennzeichnet, dass**
- anstelle der beiden Antennenmodule mit jeweils zwei Ausgängen mehrere einfache Antennenmodule (40) verwendet sind und
- die Einzelantennen aus einfacheren Antennenelementen in Form eines kombinierten Strahlers für terrestrische und Satellitensignale (54) bestehen und in der Weise am Fahrzeug angebracht sind, dass eine günstige sektorale diversitätsmäßige Abdeckung aller Raumrichtungen gegeben ist. (Fig. 20)

11. Diversity- Empfangsanlage nach Anspruch 7
**dadurch gekennzeichnet, dass**
- anstelle der beiden Antennenmodule mit jeweils zwei Ausgängen (48,49) mehrere einfache Antennenmodule (40) verwendet sind und
- diese aus einfacheren Antennenelementen in Form eines kombinierten Strahlers für terrestrische und Satellitensignale (54) bestehen und in der Weise am Fahrzeug angebracht sind, dass eine günstige sektorale diversitätsmäßige Abdeckung aller Raumrichtungen gegeben ist. (Fig. 21)
